# EUROPEAN PATENT APPLICATION

(11) **EP 4 568 377 A1**
(43) Date of publication of application: **11.06.2025**
(21) Application number: 22956068.5
(22) Date of filing: 25.08.2022
(51) Int. Cl.: H04W 72/04

(54) **METHOD AND APPARATUS FOR SENDING OR RECEIVING SENSING SIGNAL**

(71) Applicant: Huawei Technologies Co., Ltd., Shenzhen, Guangdong 518129 (CN)
(72) Inventor: DONG, Lei, Shenzhen, Guangdong 518129 (CN); TANG, Hao, Shenzhen, Guangdong 518129 (CN); WEI, Dongdong, Shenzhen, Guangdong 518129 (CN)
(74) Representative: Gill Jennings & Every LLP
(86) International application number: PCT/CN2022/114826
(87) International publication number: WO 2024/040521

(57) **Abstract**

This application provides a method for sending or receiving a sensing signal and an apparatus, and relates to the field of communication technologies, so that sending, receiving, and corresponding sensing and measurement procedures of a sensing signal are implemented based on a sidelink in combination with a sensing network. The method includes: A first terminal determines a first resource used to send a sensing signal; and sends the sensing signal to at least one second terminal by using the first resource, sends the sensing signal to both a network device and the at least one second terminal by using the first resource, or separately sends sensing signals to the at least one second terminal and the network device by using the first resource and a second resource, where the second resource is a resource used to send the sensing signal, and the first resource and/or the second resource are/is some resource units in a first resource set, where the first resource set includes resources used to send uplink information.

## Description

### TECHNICAL FIELD

This application relates to the field of communication technologies, and in particular, to a method for sending or receiving a sensing signal and an apparatus.

### BACKGROUND

With development of wireless communication technologies, higher data transmission requirements, for example, a higher throughput, a lower latency, higher reliability, and a larger quantity of connections, are imposed for a 5th generation communication technology (5th Generation Mobile Communication Technology, 5G), that is, a new radio (New Radio, NR) system nowadays. To meet the transmission requirements, technologies such as enhanced mobile broadband (enhanced mobile broadband, eMBB), ultra-reliable and low-latency communication (Ultra-reliable and Low-Latency Communication, URLLC), and massive machine type communication (Massive Machine Type Communication, mMTC) are proposed based on a 5G communication system. In addition, integration of a communication network, a sensing network, a computing power network, and the like may be further implemented through a new generation communication technology and a next generation communication technology, to achieve higher transmission efficiency. The sensing network is a communication system that can sense attributes and statuses of a service, a network, a user equipment (User Equipment, UE), a surrounding environment, a surrounding object, and the like. Specifically, for example, the sensing network may be a system that implements a function such as target positioning (for example, ranging, speed measurement, or angle measurement), target imaging, target detection, or target recognition through sensing or measurement.

In NR, communication between UEs is referred to as a sidelink (sidelink, SL). Currently, there is no definition and corresponding sensing and measurement procedures of a sensing signal between the UEs.

### SUMMARY

This application provides a method for sending or receiving a sensing signal and an apparatus, so that sending, receiving, and corresponding sensing and measurement procedures of a sensing signal are implemented based on a sidelink in combination with a sensing network.

To achieve the foregoing objectives, this application uses the following technical solutions.

According to a first aspect, a method for sending a sensing signal is provided. The method includes: A first terminal determines a first resource used to send a sensing signal; and sends the sensing signal to at least one second terminal by using the first resource, sends the sensing signal to both a network device and the at least one second terminal by using the first resource, or separately sends sensing signals to the at least one second terminal and the network device by using the first resource and a second resource, where the second resource is a resource used to send the sensing signal, and the first resource and/or the second resource are/is some resource units in a first resource set, where the first resource set includes resources used to send uplink information.

In the foregoing technical solutions of this application, an uplink resource of a terminal is configured as a resource used to send a sensing signal, and the existing uplink resource is fully used, to implement a sensing/measurement task between terminals and improve communication transmission efficiency.

In a possible implementation, the method further includes: receiving first indication information from the network device, where the first indication information indicates that the first resource and/or the second resource are/is used to receive or send the sensing signal. The network device may configure, for a transmit end through dynamic configuration or semi-static configuration, a resource for sending or receiving the sensing signal, to improve flexibility of sensing and measurement. For example, the network device dynamically configures, for the transmit end by sending the first indication information, a resource used to send the sensing signal, or may predefine some resources used to send or receive the sensing signal, and then indicate, to the transmit end through semi-static configuration, that is, by sending the first indication information, that some or all resources in the resources may be used to send the sensing signal.

In a possible implementation, the method further includes: receiving second indication information from the network device, where the second indication information indicates that some or all resource units in the first resource and/or the second resource are used to send the sensing signal. The network device may configure a sensing resource for the transmit end through a one-stage configuration or a two-stage configuration, to improve flexibility of sensing resource configuration. For example, the one-stage configuration means that the network device may configure, for the transmit end via the second indication information, a resource used to send the sensing signal. The two-stage configuration means that the network device first indicates, via the first indication information, a sensing resource used to send or receive the sensing signal, and then indicates, via the second indication information, that some or all resources of the sensing resource are used to send the sensing signal.

In a possible implementation, the method further includes: determining, based on at least one of a first timing advance between uplink transmission and downlink transmission of the first terminal, a first parameter, or a value of a transmission delay between the first terminal and the second terminal, a timing advance for sending the sensing signal to the second terminal. To improve flexibility and time sensitivity of sending the sensing signal by the transmit end, the first terminal may be configured with a timing advance value for sending the sensing signal to the second terminal, so that the transmit end can adjust the timing advance based on the configured first parameter to meet a specific requirement of the sensing signal.

In a possible implementation, the first parameter may be predefined, or may be configured by the network device. The network device may directly configure a timing advance adjustment value for sending the sensing signal by the first terminal, or may configure the first parameter, so that the first terminal may obtain, based on the first parameter in combination with the timing advance between the uplink transmission and the downlink transmission of the first terminal, the timing advance for sending the sensing signal, to improve configuration flexibility.

According to a second aspect, a method for sending or receiving a sensing signal is provided. The method includes: A network device determines a first resource used by a first terminal to send or receive a sensing signal, where the first resource is some resource units in a first resource set, and the first resource set includes resources used by the first terminal to send uplink information; and the network device determines a first resource used by a second terminal to send or receive a sensing signal, where the first resource is some resource units in a second resource set, and the second resource set includes resources used by the second terminal to send uplink information.

In the foregoing technical solutions of this application, the network device configures an uplink resource of a terminal as a resource used to send a sensing signal, and synchronously receives the sensing signal on the configured resource, to fully use the existing uplink resource, implement a sensing/measurement task between the terminal and a terminal/the network device, and improve communication transmission efficiency.

In a possible implementation, the method further includes: receiving the sensing signal from the first terminal by using the first resource.

In a possible implementation, the method further includes: sending first indication information to the first terminal, where the first indication information indicates that the first resource is used to send or receive the sensing signal.

In a possible implementation, the method further includes: sending second indication information to the first terminal, where the second indication information indicates that some or all resource units in the first resource are used to send the sensing signal.

In a possible implementation, the method further includes: sending third indication information to the second terminal, where the third indication information indicates that some or all resource units in the first resource are used to send or receive the sensing signal.

In a possible implementation, the method further includes: sending fourth indication information to the second terminal, where the fourth indication information indicates that some or all resource units in the first resource are used to receive the sensing signal.

In a possible implementation, the method further includes: receiving a sensing result from the second terminal, where the sensing result is determined by the second terminal based on the sensing signal received from the first terminal.

In a possible implementation, the method further includes: sending a first parameter to the first terminal, where the first parameter is used to determine a timing advance for sending the sensing signal by the first terminal to the second terminal.

In a possible implementation, the method further includes: sending at least one second parameter to the second terminal, where the at least one second parameter is used by the second terminal to determine a timing advance for receiving the sensing signal from the first terminal.

In a possible implementation, the second parameter is determined by using at least one of the following: a first timing advance between uplink transmission and downlink transmission of the first terminal, a half of the first timing advance, a sum of the first timing advance and a second timing advance between uplink transmission and downlink transmission of the second terminal, a difference between the first timing advance and the second timing advance between the uplink transmission and the downlink transmission of the second terminal, a half of the sum of the second timing advance and the first timing advance, or a half of the difference between the second timing advance and the first timing advance.

According to a third aspect, a method for receiving a sensing signal. The method includes: A second terminal determines a first resource; and receives a sensing signal from a first terminal by using the first resource, where the first resource is some resource units in a second resource set, and the second resource set includes resources used to send uplink information.

In the foregoing technical solutions of this application, a network device configures some uplink resources of a terminal for receiving a sensing signal as resources used to receive the sensing signal, to fully use the existing uplink resources, so as to implement a sensing/measurement task between terminals and improve communication transmission efficiency.

In a possible implementation, the method further includes: receiving third indication information from a network device, where the third indication information indicates that the first resource is used to send or receive the sensing signal. The network device may configure a transmission resource of the sensing signal for a receive end through dynamic configuration or semi-static configuration, to improve flexibility of sensing and measurement.

In a possible implementation, the method further includes: receiving fourth indication information from the network device, where the fourth indication information indicates that some or all resource units in the first resource are used to receive the sensing signal. The network device may configure a sensing resource for the transmit end through a one-stage configuration or a two-stage configuration, to improve flexibility of sensing resource configuration.

In a possible implementation, the third indication information or the fourth indication information further indicates that a third resource is a guard symbol, and the third resource is some resource units in the second resource set, or the third resource is some resource units in the first resource.

In a possible implementation, the method further includes: determining, based on at least one of a second parameter, a second timing advance between uplink transmission and downlink transmission of the second terminal, or a value of a transmission delay between the first terminal and the second terminal, a timing advance for receiving the sensing signal from the first terminal. To enable the receive end to synchronously receive the sensing signal, the network device may configure, for the transmit end, a timing advance for receiving the sensing signal, so that the receive end adjusts timing based on the configured second parameter, to improve transmission efficiency of a sensing network.

In a possible implementation, the second parameter is determined by using at least one of the following: a first timing advance between uplink transmission and downlink transmission of the first terminal, a half of the first timing advance, a sum of the first timing advance and a second timing advance between uplink transmission and downlink transmission of the second terminal, a difference between the first timing advance and the second timing advance between the uplink transmission and the downlink transmission of the second terminal, a half of the sum of the second timing advance and the first timing advance, or a half of the difference between the second timing advance and the first timing advance.

In a possible implementation, the second parameter may be predefined, or may be configured by the network device.

According to a fourth aspect, a communication apparatus is provided. The communication apparatus may be used in a first communication apparatus according to the first aspect. The communication apparatus may be a terminal device, may be an apparatus (for example, a chip, a chip system, or a circuit) in the terminal device, or may be an apparatus that can be used in a combination with the terminal device.

In a possible implementation, the communication apparatus may include modules or units in one-to-one correspondence with the methods/operations/steps/actions described in the first aspect. The modules or units may be implemented by a hardware circuit, software, or a combination of the hardware circuit and the software.

In a possible implementation, the communication apparatus includes: a processing module, configured to determine a first resource used to send a sensing signal; and a transceiver module, configured to send the sensing signal to at least one second terminal by using the first resource, send the sensing signal to both a network device and the at least one second terminal by using the first resource, or separately send sensing signals to the at least one second terminal and the network device by using the first resource and a second resource, where the second resource is a resource used to send the sensing signal, and the first resource and/or the second resource are/is some resource units in a first resource set, where the first resource set includes resources used to send uplink information.

In a possible implementation, the transceiver module is further configured to receive first indication information from the network device, where the first indication information indicates that the first resource and/or the second resource are/is used to receive or send the sensing signal.

In a possible implementation, the transceiver module is further configured to receive second indication information from the network device, where the second indication information indicates that some or all resource units in the first resource and/or the second resource are used to send the sensing signal.

In a possible implementation, the processing module is further configured to determine, based on at least one of a first timing advance between uplink transmission and downlink transmission of the apparatus, a first parameter, or a value of a transmission delay between the apparatus and the second terminal, a timing advance for sending the sensing signal to the second terminal.

In a possible implementation, the first parameter is predefined, or is configured by the network device.

According to a fifth aspect, a communication apparatus is provided. The communication apparatus may be used in a second communication apparatus according to the second aspect. The communication apparatus may be a network device, may be an apparatus (for example, a chip, a chip system, or a circuit) in the network device, or may be an apparatus that can be used in a combination with the network device.

In a possible implementation, the communication apparatus may include modules or units in one-to-one correspondence with the methods/operations/steps/actions described in the second aspect. The modules or units may be implemented by a hardware circuit, software, or a combination of the hardware circuit and the software.

In a possible implementation, the communication apparatus includes: a processing module, configured to determine a first resource used by a first terminal to send or receive a sensing signal, where the first resource is some resource units in a first resource set, and the first resource set includes resources used by the first terminal to send uplink information, where the processing module is further configured to determine a first resource used by a second terminal to send or receive a sensing signal, where the first resource is some resource units in a second resource set, and the second resource set includes resources used by the second terminal to send uplink information.

In a possible implementation, the apparatus further includes a transceiver module, configured to receive the sensing signal from the first terminal by using the first resource.

In a possible implementation, the transceiver module is further configured to send first indication information to the first terminal, where the first indication information indicates that the first resource is used to send or receive the sensing signal.

In a possible implementation, the transceiver module is further configured to send second indication information to the first terminal, where the second indication information indicates that some or all resource units in the first resource are used to send the sensing signal.

In a possible implementation, the transceiver module is further configured to send third indication information to the second terminal, where the third indication information indicates that some or all resource units in the first resource are used to send or receive the sensing signal.

In a possible implementation, the transceiver module is further configured to send fourth indication information to the second terminal, where the fourth indication information indicates that some or all resource units in the first resource are used to receive the sensing signal.

In a possible implementation, the transceiver module is further configured to receive a sensing result from the second terminal, where the sensing result is determined by the second terminal based on the sensing signal received from the first terminal.

In a possible implementation, the transceiver module is further configured to send a first parameter to the first terminal, where the first parameter is used to determine a timing advance for sending the sensing signal by the first terminal to the second terminal.

In a possible implementation, the transceiver module is further configured to send at least one second parameter to the second terminal, where the at least one second parameter is used by the second terminal to determine a timing advance for receiving the sensing signal from the first terminal.

In a possible implementation, the second parameter is determined by using at least one of the following: a first timing advance between uplink transmission and downlink transmission of the first terminal, a half of the first timing advance, a sum of the first timing advance and a second timing advance between uplink transmission and downlink transmission of the second terminal, a difference between the first timing advance and the second timing advance between the uplink transmission and the downlink transmission of the second terminal, a half of the sum of the second timing advance and the first timing advance, or a half of the difference between the second timing advance and the first timing advance.

According to a sixth aspect, a communication apparatus is provided. The communication apparatus may be used in a third communication apparatus according to the third aspect. The communication apparatus may be a terminal device, may be an apparatus (for example, a chip, a chip system, or a circuit) in the terminal device, or may be an apparatus that can be used in a combination with the terminal device.

In a possible implementation, the communication apparatus may include modules or units in one-to-one correspondence with the methods/operations/steps/actions described in the third aspect. The modules or units may be implemented by a hardware circuit, software, or a combination of the hardware circuit and the software.

In a possible implementation, the communication apparatus includes: a processing module, configured to determine a first resource; and a transceiver module, configured to receive a sensing signal from a first terminal by using the first resource, where the first resource is some resource units in a second resource set, and the second resource set includes resources used to send uplink information.

In a possible implementation, the transceiver module is further configured to receive third indication information from a network device, where the third indication information indicates that the first resource is used to send or receive the sensing signal.

In a possible implementation, the transceiver module is further configured to receive fourth indication information from the network device, where the fourth indication information indicates that some or all resource units in the first resource are used to receive the sensing signal.

In a possible implementation, the third indication information or the fourth indication information further indicates that a third resource is a guard symbol, and the third resource is some resource units in the second resource set, or the third resource is some resource units in the first resource.

In a possible implementation, the processing module is further configured to determine, based on at least one of a second parameter, a second timing advance between uplink transmission and downlink transmission of the apparatus, or a value of a transmission delay between the first terminal and the apparatus, a timing advance for receiving the sensing signal from the first terminal.

In a possible implementation, the second parameter is determined by using at least one of the following: a first timing advance between uplink transmission and downlink transmission of the first terminal, a half of the first timing advance, a sum of the first timing advance and a second timing advance between uplink transmission and downlink transmission of the apparatus, a difference between the first timing advance and the second timing advance between the uplink transmission and the downlink transmission of the second terminal, a half of the sum of the second timing advance and the first timing advance, or a half of the difference between the second timing advance and the first timing advance.

In a possible implementation, the second parameter is predefined, or is configured by the network device.

According to a seventh aspect, a communication apparatus is provided. The communication apparatus includes a processor and a communication interface. The communication interface is configured to transmit a signal. The processor is configured to perform the method according to any implementation of the first aspect.

In a possible implementation, the processor is configured to run instructions stored in a memory, to perform the method according to any implementation of the first aspect.

In a possible implementation, the communication apparatus further includes the memory.

In a possible implementation, the processor is configured to perform the method according to any implementation of the first aspect through a logic circuit.

According to an eighth aspect, a communication apparatus is provided. The communication apparatus includes a processor and a communication interface. The communication interface is configured to transmit a signal. The processor is configured to perform the method according to any implementation of the second aspect.

In a possible implementation, the processor is configured to run instructions stored in a memory, to perform the method according to any implementation of the second aspect.

In a possible implementation, the communication apparatus further includes the memory.

In a possible implementation, the processor is configured to perform the method according to any implementation of the second aspect through a logic circuit.

According to a ninth aspect, a communication apparatus is provided. The communication apparatus includes a processor and a communication interface. The communication interface is configured to transmit a signal. The processor is configured to perform the method according to any implementation of the third aspect.

In a possible implementation, the processor is configured to run instructions stored in a memory, to perform the method according to any implementation of the third aspect.

In a possible implementation, the communication apparatus further includes the memory.

In a possible implementation, the processor is configured to perform the method according to any implementation of the third aspect through a logic circuit.

According to a tenth aspect, a computer-readable storage medium, including a program or instructions. When the program or the instructions are run by a processor, the method according to any implementation of the first aspect is performed.

According to an eleventh aspect, a computer-readable storage medium, including a program or instructions. When the program or the instructions are run by a processor, the method according to any implementation of the second aspect is performed.

According to a twelfth aspect, a computer-readable storage medium, including a program or instructions. When the program or the instructions are run by a processor, the method according to any implementation of the third aspect is performed.

According to a thirteenth aspect, a computer program product is provided. When the computer program product runs on a computer or a processor, the computer or the processor is enabled to perform the method according to any implementation of the first aspect.

According to a fourteenth aspect, a computer program product is provided. When the computer program product runs on a computer or a processor, the computer or the processor is enabled to perform the method according to any implementation of the second aspect.

According to a fifteenth aspect, a computer program product is provided. When the computer program product runs on a computer or a processor, the computer or the processor is enabled to perform the method according to any implementation of the third aspect.

According to a sixteenth aspect, a communication system is provided. The communication system includes the communication apparatus according to any implementation of the fourth aspect, the communication apparatus according to any implementation of the fifth aspect, and the communication apparatus according to any implementation of the sixth aspect.

It may be understood that any one of the communication apparatus, the computer-readable storage medium, the computer program product, or the communication system provided above may be implemented by using the corresponding method provided above. Therefore, for a beneficial effect that can be achieved by the communication apparatus, the computer-readable storage medium, the computer program product, or the communication system, refer to the beneficial effect in the corresponding method provided above. Details are not described herein again.

### BRIEF DESCRIPTION OF DRAWINGS

FIG. 1 is a diagram of a system architecture of a sensing network according to an embodiment of this application;
FIG. 2 is a diagram of a system architecture of a communication network according to an embodiment of this application;
FIG. 3 is a diagram of a structure of a communication apparatus according to an embodiment of this application;
FIG. 4 is an interaction diagram of a method for sending or receiving a sensing signal according to an embodiment of this application;
FIG. 5 is a diagram of a configuration of a sensing resource of a transmit end according to an embodiment of this application;
FIG. 6 is a diagram of a configuration of a sensing resource of a receive end according to an embodiment of this application;
FIG. 7 is an interaction diagram of another method for sending or receiving a sensing signal according to an embodiment of this application;
FIG. 8 is an interaction diagram of another method for sending or receiving a sensing signal according to an embodiment of this application;
FIG. 9 to FIG. 12 are diagrams of a timing advance according to an embodiment of this application; and
FIG. 13 is a diagram of a communication apparatus according to an embodiment of this application.

### DESCRIPTION OF EMBODIMENTS

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of embodiments, unless otherwise specified, "a plurality of" means two or more than two.

It should be noted that, in this application, the terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a relative concept in a specific manner.

The following clearly and completely describes the technical solutions in embodiments of this application with reference to the accompanying drawings in embodiments of this application. Apparently, the described embodiments are merely some but not all of embodiments of this application. All other embodiments obtained by a person of ordinary skill in the art based on embodiments of this application without creative efforts shall fall within the protection scope of this application.

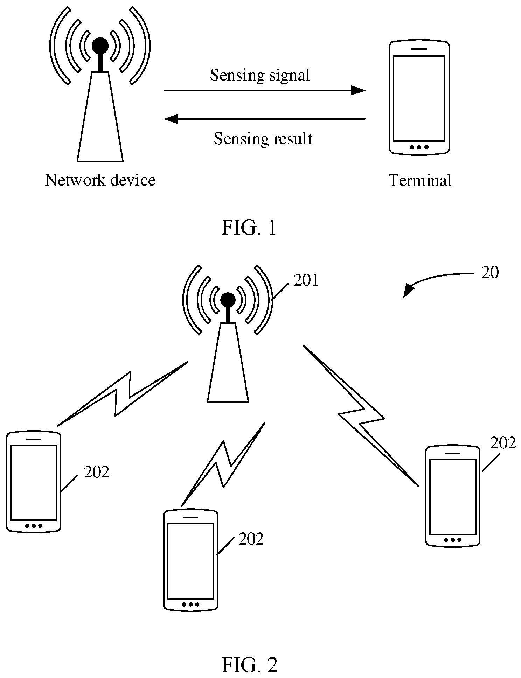

Currently, application of a sensing network may be implemented through a wireless local area network (Wireless Local Area Network, WLAN). As shown in FIG. 1, an access point (access point, AP) initiates a sensing procedure, and sends a sensing signal to at least one UE. After receiving the sensing signal, the UE performs measurement to generate a sensing result, and feeds back the sensing result to the AP.

The technical solutions provided in this application may be applied to various communication systems, for example, a 5G communication system, an evolved system after 5G, or a plurality of communication convergence systems, or may be applied to an existing communication system or the like. Application scenarios of the technical solutions provided in this application may include a plurality of application scenarios, for example, machine to machine (machine to machine, M2M), macro-micro communication, enhanced mobile broadband (enhanced mobile broadband, eMBB), ultra-reliable and low-latency communication (ultra-reliable and low-latency communication, uRLLC), and massive machine type communication (massive machine type communication, mMTC). These application scenarios may include but are not limited to: a scenario of communication between user equipments, a scenario of communication between network devices, a scenario of communication between a network device and a user equipment, and the like. An example in which the technical solutions are applied to the scenario of communication between the network device and the user equipment is used below for description.

A communication system shown in FIG. 2 is used below to describe an application scenario of this application.

In FIG. 2, the communication system 20 may include one or more network devices 201 (only one network device is shown) and one or more terminal devices 202 connected to each network device 201. FIG. 2 is merely a diagram, and does not constitute any limitation on an applicable scenario of the technical solutions provided in this application.

The network device 201 is a device having a wireless transceiver function, and is configured to communicate with the terminal device, or may be a device that enables the terminal device to access a wireless network. The network device 201 may be a node in a radio access network, or may be referred to as a base station, or may be referred to as a radio access network (radio access network, RAN) node (or device). The network device may be an evolved NodeB (evolved NodeB, eNB or eNodeB) in a long term evolution (long term evolution, LTE) system, a next generation NodeB (next generation NodeB, gNB) in a 5G network or a base station in a future evolved public land mobile network (public land mobile network, PLMN), a broadband network gateway (broadband network gateway, BNG), an aggregation switch or a non-3rd generation partnership project (3rd generation partnership project, 3GPP) access device, or the like. Optionally, the network device in embodiments of this application may include base stations in various forms, for example, a macro base station, a micro base station (also referred to as a small cell), a relay station, an access point, a device for implementing a base station function in a communication system evolved after 5G, an access point (access point, AP) in a Wi-Fi system, a transmission point (transmitting and receiving point, TRP), a transmitting point (transmitting point, TP), a mobile switching center, and a device that undertakes a base station function in device-to-device (Device-to-Device, D2D), vehicle-to-everything (vehicle-to-everything, V2X), and machine-to-machine (machine-to-machine, M2M) communication, and may further include a central unit (central unit, CU) and a distributed unit (distributed unit, DU) in a cloud radio access network (cloud radio access network, C-RAN) system, and a network device in a non-terrestrial network (non-terrestrial network, NTN) communication system, that is, may be deployed on a high-altitude platform or a satellite. This is not specifically limited in embodiments of this application.

The terminal device 202 may be a user equipment, an access terminal, a UE unit, a UE station, a mobile station, a remote station, a remote terminal, a mobile device, a UE terminal, a wireless communication device, a UE agent, a UE apparatus, or the like. The terminal device 202 may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, or another processing device connected to a wireless modem, a customer-premises equipment (customer-premises equipment, CPE), a point of sale (point of sale, POS) machine, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in a smart city (smart city), a wireless terminal in a smart home (smart home), a vehicle-mounted device, a wearable device, a UE in a 5G network or a UE in a PLMN network evolved after 5G, or the like.

Optionally, each network element (for example, the network device 201 and the terminal device 202) in FIG. 2 may be implemented by one device, may be jointly implemented by a plurality of devices, or may be a function module in a device. This is not specifically limited in this embodiment of this application. It may be understood that the foregoing functions may be network elements in a hardware device, may be software functions running on dedicated hardware, or may be virtualization functions instantiated on a platform (for example, a cloud platform).

It should be noted that FIG. 2 is merely an example diagram of the architecture. In addition to the functional units shown in FIG. 2, the communication system may further include another functional network element, for example, a policy control network element, a unified data management (unified data management, UDM), an operation and management (operation and management, O&M) network element. This is not limited in this embodiment of this application. In addition, names of the network elements in FIG. 2 are not limited. In addition to the names shown in FIG. 2, the network elements may also have other names. For example, the names may be replaced with names of network elements having same or similar functions. This is not limited.

Optionally, each network element in FIG. 2 in this embodiment of this application, for example, the network device 201 or the terminal device 202, may be a functional module in a device. It may be understood that the functional module may be a network element in a hardware device, for example, a communication chip in a mobile phone, may be a software function running on dedicated hardware, or may be a virtualization function instantiated on a platform (for example, a cloud platform).

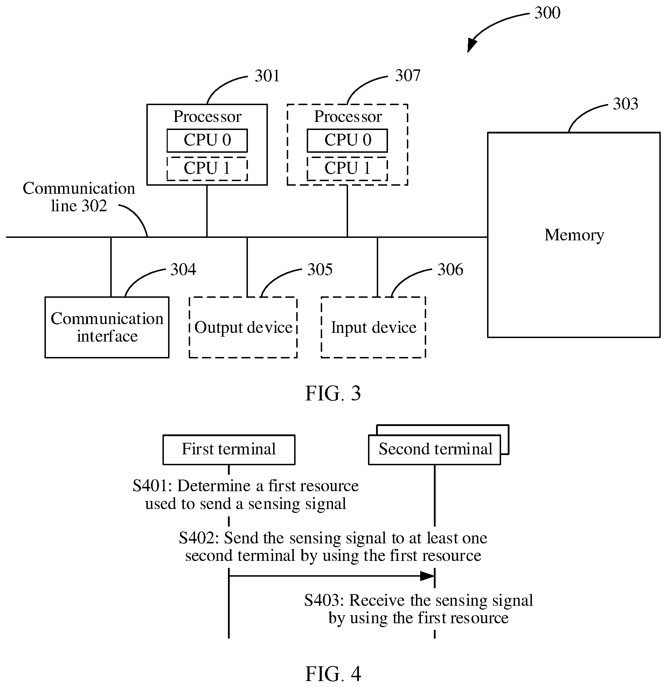

For example, each network element in FIG. 2 may be implemented by using a communication device 300 in FIG. 3. FIG. 3 is a diagram of a hardware structure of a communication device according to an embodiment of this application. The communication device 300 may include at least one processor 301, a communication line 302, a memory 303, and at least one communication interface 304.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for transferring information between the foregoing components, for example, a bus.

The communication interface 304 may be used in any apparatus like a transceiver, and is configured to communicate with another device or communication network, for example, may be an Ethernet network interface, a RAN interface, or a WLAN interface.

The memory 303 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile optical disc, a Blue-ray optical disc, or the like), a magnetic disk storage medium or another magnetic storage device, or any other medium capable of carrying or storing expected program code in a form of instructions or a data structure and capable of being accessed by a computer, but is not limited thereto. The memory may exist independently, and is connected to the processor through the communication line 302. The memory may alternatively be integrated with the processor. The memory provided in this embodiment of this application may be usually nonvolatile. The memory 303 is configured to store computer-executable instructions for executing the solutions of this application, and the processor 301 controls execution. The processor 301 is configured to execute the computer-executable instructions stored in the memory 303, to implement the method provided in embodiments of this application.

Optionally, the computer-executable instruction in this embodiment of this application may also be referred to as application program code. This is not specifically limited in this embodiment of this application.

During specific implementation, in an embodiment, the processor 301 may include one or more CPUs, for example, a CPU 0 and a CPU 1 in FIG. 3.

During specific implementation, in an embodiment, the communication device 300 may alternatively include a plurality of processors, for example, the processor 301 and a processor 307 shown in FIG. 3. Each of these processors may be a single-core (single-CPU) processor, or may be a multi-core (multi-CPU) processor. The processor herein may be one or more devices, circuits, and/or processing cores configured to process data (for example, a computer program instruction).

During specific implementation, in an embodiment, the communication device 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, a projector (projector), or the like. The input device 306 communicates with the processor 301, and may receive an input of a user in a plurality of manners. For example, the input device 306 may be a mouse, a keyboard, a touchscreen device, or a sensor device.

In a specific implementation, the communication device 300 may be each of the foregoing possible terminal devices or a device with a structure similar to that in FIG. 3. A type of the communication device 300 is not limited in this embodiment of this application.

The following describes in detail a method for sending or receiving data provided in embodiments of this application with reference to FIG. 2 and FIG. 3. A network element in the following embodiments may have the components shown in FIG. 3.

It should be noted that names of messages between network elements, names of parameters in the messages, or the like in the following embodiments of this application are merely examples, and there may be other names in a specific implementation. This is not specifically limited in embodiments of this application.

It may be understood that some or all of steps in embodiments of this application are merely examples. Other steps or variations of various steps may be further performed in embodiments of this application. In addition, the steps may be performed in different sequences presented in embodiments of this application, and not all steps in embodiments of this application need to be performed.

A method for sending or receiving a sensing signal provided in embodiments of this application may be applied to the communication system shown in FIG. 2. In embodiments of this application, some resources of an uplink resource of a first terminal are defined as a resource (referred to as a sensing resource for short in embodiments of this application) for sending a sensing signal, so that the first terminal may send the sensing signal to a second terminal and/or a network device by using the sensing resource, to implement a sensing/measurement task. Further, to improve communication efficiency, the first terminal alternatively sends the sensing signal to both the network device and at least one second terminal by using the sensing resource, so as to synchronously complete a sensing/measurement task between the network device and the terminal and a sensing/measurement task between terminals.

The following describes, with reference to specific embodiments, the method for sending or receiving a sensing signal provided in this application. For example, in the following embodiment in FIG. 4 of this application, a method for sending a sensing signal provided in this application is described by using an example in which a first terminal is used as a transmit end of a sensing signal, and a method for receiving a sensing signal provided in this application is described by using an example in which a second terminal is used as a receive end of a sensing signal.

As shown in FIG. 4, the method may be applied to exchange of a sensing signal between a first terminal and a second terminal, and may specifically include the following steps.

S401: The first terminal determines a first resource used to send the sensing signal.

The first resource is some resource units in a first resource set, and the first resource set includes resources used to send uplink information, that is, the first resource set is an uplink resource set of the first terminal. The uplink information may include data information and/or control information. In other words, the first terminal may send the sensing signal by using some of configured uplink resources.

In an implementation, some or all resources of the uplink resource of the first terminal may be configured for sending or receiving the sensing signal. The first resource is a resource that is in the first resource set and that is defined as a resource used to send the sensing signal, or is defined as a resource used to send or receive the sensing signal. Therefore, when the first terminal needs to send the sensing signal, the first terminal may determine, based on a resource configuration, the first resource or another resource used to send the sensing signal.

In another implementation, no dedicated configuration is needed for the first terminal that is used as the transmit end of the sensing signal, and some resources of the uplink resource of the first terminal are used to send the sensing signal. A resource used to receive the sensing signal is configured for the second terminal that is used as the receive end of the sensing signal, and synchronization between the receive end and the transmit end is ensured, so that the receive end can successfully receive the sensing signal. A resource configuration manner in which the receive end receives the sensing signal is described below. Details are not described herein.

It should be noted that, in this embodiment of this application, a resource used to send or receive the sensing signal may be referred to as a sensing (Sensing) resource, which is referred to as an SE resource for short; a resource used only to send the sensing signal may be referred to as a sensing-transmit (Sensing-Transmit) resource, which is referred to as an ST resource for short; and a resource used only to receive the sensing signal may be referred to as a sensing-receive (Sensing-Receive) resource, which is referred to as an SR resource for short.

In addition, it should be noted that, in a sensing resource configuration process, a configuration of a sensing resource of the transmit end needs to be the same as a configuration of a sensing resource of the receive end, so that the receive end correctly receives the sensing signal sent by the transmit end. For example, the transmit end is configured to use the first resource as a resource for sending the sensing signal or as a resource for sending and receiving sensing signals; and the receive end is also configured to use the first resource as a resource for receiving the sensing signal.

In this embodiment of this application, a time unit of a resource unit configured as the sensing resource may be a frame, a subframe, a slot, a mini-slot, a symbol, or the like. This is not specifically limited in this application.

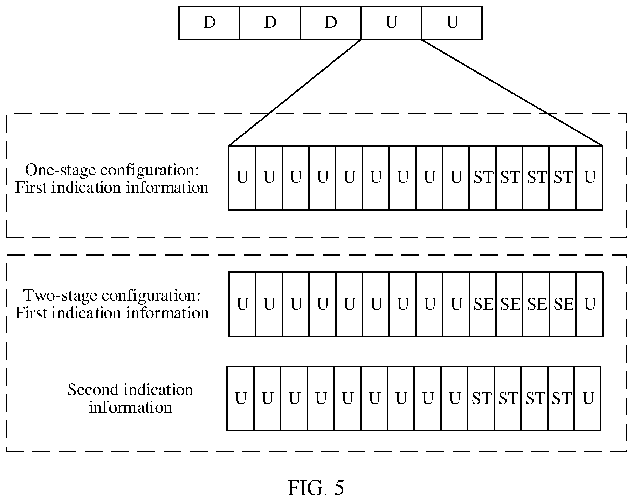

For example, a communication system may configure some resources for the first terminal for uplink sending or downlink receiving. FIG. 5 shows a possible frame structure of a configuration of some resources of the first terminal. In FIG. 5, U represents an uplink (Uplink) resource, and D represents a downlink (Downlink) resource.

As shown in FIG. 5, an example in which a slot is a resource unit of a resource in time domain is used. A 10^{th} symbol to a 13^{th} symbol in a 1^{st} uplink slot of the first terminal are configured as SE symbols used to send or receive a sensing signal, or the 10^{th} symbol to the 13^{th} symbol are configured as ST symbols used to send the sensing signal.

Further, a configuration manner of the sensing resource of the first terminal may be specifically a dynamic configuration (a dynamic indication), a static configuration (a pre-configuration), a semi-static configuration (a pre-configuration and a dynamic indication), or the like. For example, a network device may first configure a cell-specific resource pool, for example, a cell-specific frame structure, for the first terminal, or the network device may configure a UE-specific resource, for example, a UE-specific frame structure, for the first terminal. In addition, the network device may further configure a beam-level frame structure, a UE-group-level frame structure, or the like for the first terminal. Then, the network device may further indicate that some symbols or flexible symbols (flexible symbols, F for short) of the uplink resource are sensing symbols used to send or receive the sensing signal.

In an implementation, the configuration manner of the sensing resource may be a one-stage configuration or a two-stage configuration. The one-stage configuration means that the network device may directly configure, via one-stage indication information, a frame structure for the UE for sending sensing signal, that is, the one-stage indication information indicates that some resource units are a resource used to send the sensing signal. The two-stage configuration means that via two-stage indication information, the network device may first configure, via indication information, a resource for sending or receiving the sensing signal as a sensing resource, and then further indicate that some resource units in the sensing resource are a sending resource or a receiving resource.

For example, the one-stage configuration specifically includes the following content.

When determining the first resource, the first terminal may receive first indication information from the network device. The first indication information indicates that the first resource is used to send the sensing signal.

For example, as shown in FIG. 5, a specific configuration manner may be that the first indication information indicates that the 10^{th} symbol to the 13^{th} symbol in the 1^{st} uplink slot of the first terminal are the ST symbols used to send the sensing signal.

For example, the two-stage configuration specifically includes the following content.
1: Before determining the first resource, the first terminal may receive first indication information from the network device, where the first indication information indicates that some or all resource units in the first resource are used to send or receive the sensing signal.
2: Then, the first terminal may receive second indication information from the network device, where the second indication information indicates that some or all resource units in the first resource are used to send the sensing signal.

For example, as shown in FIG. 5, a specific configuration manner may be that the first indication information indicates that the 10^{th} symbol to the 13^{th} symbol in the 1^{st} uplink slot of the first terminal are the SE symbols used to send or receive the sensing signal; and then the second indication information indicates that the 10^{th} symbol to the 13^{th} symbol in the 1^{st} uplink slot of the first terminal are the ST symbols used to send the sensing signal.

S402: The first terminal sends the sensing signal to at least one second terminal by using the first resource.

The first terminal may send the sensing signal to one second terminal by using the first resource, or may send the sensing signal to a plurality of second terminals at the same time by using the first resource.

The sensing signal may be specifically a measurement signal, a reference signal, or the like. A specific form of the sensing signal, information included in the sensing signal, or the like is not specifically limited in this embodiment of this application.

S403: The second terminal receives the sensing signal by using the first resource.

In an implementation, the second terminal may determine a sensing result based on the received sensing signal.

The second terminal may determine, based on a location of a preconfigured sensing resource or a sensing resource configuration from the network device, that a resource for receiving the sensing signal is the first resource, and then receive the sensing signal from the first terminal by using the first resource.

In an implementation, for a configuration of a sensing resource, refer to the similar manner in step S401. In other words, some or all resources of an uplink resource of the second terminal are configured for receiving the sensing signal, or configured for receiving or sending the sensing signal.

For example, an uplink resource set of the second terminal includes a second resource set. Some resource units, for example, the first resource, in the second resource set may be configured as a sensing resource. In other words, the first resource may be used to receive the sensing signal, or may be used to receive or send the sensing signal. Therefore, the second terminal may determine, based on a resource configuration, the first resource or another resource for receiving the sensing signal.

In an implementation, some or all resources in the second resource set may overlap the resources in the first resource set on the first terminal side.

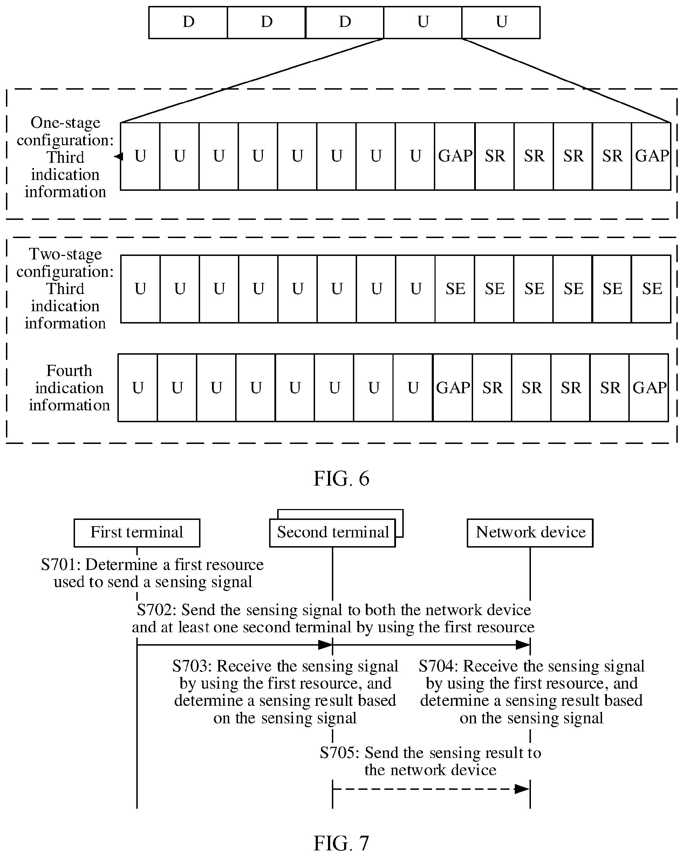

For example, as shown in FIG. 6, an example in which a resource unit in time domain is a slot is used. A 10^{th} symbol to a 13^{th} symbol in a 1^{st} uplink slot of the second terminal are configured as SE symbols used to send or receive a sensing signal, or the 10^{th} symbol to the 13^{th} symbol are configured as SR symbols used to receive the sensing signal.

In an implementation, for the second terminal as the receive end of the sensing signal, some resource units may be configured as guard symbols (guard symbols) between the uplink resource and the sensing resource, to implement receiving and sending conversion.

Further, a configuration manner of the sensing resource and the guard symbol of the second terminal may be specifically a dynamic configuration (a dynamic indication), a static configuration (a pre-configuration), a semi-static configuration (a pre-configuration and a dynamic indication), or the like. For example, the network device may first configure a cell-specific resource pool, for example, a cell-specific frame structure, for the second terminal, or the network device may configure a UE-specific resource, for example, a UE-specific frame structure, for the second terminal. Then, the network device may further indicate that some symbols or flexible symbols of the uplink resource are sensing symbols used to receive the sensing signal, or sensing symbols used to send or receive the sensing signal.

In an implementation, refer to the foregoing manner, a configuration manner of the sensing resource of the second terminal may be a one-stage configuration or a two-stage configuration.

For example, the one-stage configuration specifically includes the following content.

When determining the first resource, the second terminal may receive third indication information from the network device. The third indication information indicates that the first resource is used to receive the sensing signal.

For example, the two-stage configuration specifically includes the following content.
1: When determining the first resource, the second terminal may receive third indication information from the network device, where the third indication information indicates that the first resource is used to send or receive the sensing signal.
2: Then, the second terminal may receive fourth indication information from the network device, where the fourth indication information indicates that some or all resource units in the first resource are used to receive the sensing signal.

Optionally, the third indication information or the fourth indication information may further indicate that a third resource is a guard symbol (guard symbol) or a gap symbol (gap symbol). Alternatively, the second terminal receives fifth indication information from the network device. The fifth indication information may indicate that a third resource is a guard symbol or a gap symbol. The third resource is some resource units in the second resource set (the uplink resource set). In other words, some resource units in the second resource set included in the uplink resource set on the second terminal side are used as guard symbols, to implement a delay of receiving and sending conversion. The third resource may be an uplink resource adjacent to the sensing resource. Alternatively, the third resource may be some resource units of the first resource. In other words, some resource units configured as the sensing resource are used as guard symbols, to implement a delay of receiving and sending conversion and ensure processing time of the receiving and sending conversion. The third resource may be a sensing resource adjacent to the uplink resource, for example, a GAP symbol shown in FIG. 6.

For example, as shown in FIG. 6, a specific configuration manner may be the one-stage configuration. The network device may send the third indication information to the second terminal, to indicate that the 10^{th} symbol to the 13^{th} symbol in the 1^{st} uplink slot of the second terminal are the SR symbols used to receive the sensing signal. In addition, the third indication information further indicates that a 9^{th} symbol and/or a 14^{th} symbol in the 1^{st} uplink slot of the second terminal are/is configured as guard symbols/a guard symbol, which are/is referred to as GAP symbols/a GAP symbol for short in FIG. 6.

For example, the third indication information includes a first field and a second field. The first field indicates the SR symbols used to receive the sensing signal, and the second field indicates the guard symbol. The first field and the second field may be used for indication by using bitmaps (bitmaps). For example, the first field and the second field respectively indicate the SR symbols and the guard symbol by using two bitmaps. Alternatively, the first field is used for indication by using a bitmap, and the second field is used for indication in a form of a flag (flag).

For example, when the flag is one bit, if the bit is 1 or 0, the following two cases are respectively indicated.

Case 1.1: It indicates that last N symbols before a 1^{st} symbol of the SR symbols for receiving the sensing signal are guard symbols, N symbols after a last symbol of the SR symbols for receiving the sensing signal are guard symbols, or the last N symbols before the 1^{st} symbol of the SR symbols for receiving the sensing signal and the N symbols after the last symbol of the SR symbols for receiving the sensing signal are guard symbols.

Case 1.2: It indicates that last N symbols before a 1^{st} symbol of the SR symbols for receiving the sensing signal are not the guard symbols, N symbols after a last symbol of the SR symbols for receiving the sensing signal are not the guard symbols, or the last N symbols before the 1^{st} symbol of the SR symbols for receiving the sensing signal and the N symbols after the last symbol of the SR symbols for receiving the sensing signal are not the guard symbols.

Because a guard symbol needs to be configured between an uplink resource (used to send a signal) and an SR resource (used to receive the signal) for receiving the sensing signal, to implement a delay of receiving and sending conversion, in this case, for a resource indicated as the guard symbol, the receive end does not need to perform parsing and decoding processing on the resource. However, both a downlink resource and the SR resource are used to receive the signal. Therefore, no guard symbol needs to be configured between the downlink resource and the SR resource. Therefore, in this embodiment of this application, when the indication information indicates that some symbols are not guard symbols, that is, the indication information indicates that the indicated symbols are all symbols for receiving the sensing signal, the receive end needs to perform processing such as parsing and decoding on the symbols for receiving the sensing signal.

For example, when the flag is two bits, if the bits are 00, 01, 10, or 11, the following four cases are respectively indicated.

Case 2.1: It indicates that last N symbols before a 1^{st} symbol of the SR symbols for receiving the sensing signal are guard symbols.

Case 2.2: It indicates that last N symbols before a 1^{st} symbol of the SR symbols for receiving the sensing signal are not guard symbols.

Case 2.3: It indicates that N symbols after a last symbol of the SR symbols for receiving the sensing signal are guard symbols.

Case 2.4: It indicates that N symbols after a last symbol of the SR symbols for receiving the sensing signal are not guard symbols.

In the foregoing two cases in which the bit is 1 or 0 and the bits are 00, 01, 10, or 11, N may be a positive integer greater than or equal to 1. A value of N may be configured based on a receiving and sending conversion capability of a UE and/or based on a frame structure. For example, a higher receiving and sending conversion capability of the UE corresponds to a smaller value of N, and a lower receiving and sending conversion capability of the UE corresponds to a larger value of N.

Alternatively, the third indication information includes a first field and a second field. The first field indicates the SR symbols used to receive the sensing signal and the guard symbol, and the second field indicates the SR symbols for receiving the sensing signal or the guard symbol. In other words, the second field further indicates, based on the plurality of symbols indicated by the first field, that some of the symbols are the SR symbols or guard symbols. Specifically, the first field and the second field may be used for indication by using bitmaps (bitmaps). For example, the first field indicates the SR symbols and the guard symbol by using one bitmap, and the second field indicates the SR symbols or the guard symbol by using the other bitmap. Alternatively, the first field indicates the SR symbols and the guard symbol by using a bitmap, and the second field is used for indication in a form of a flag (flag).

For example, when the flag is one bit, if the bit is 1 or 0, the following two cases are respectively indicated.

Case 3.1: It indicates that N symbols indicated by the first field are guard symbols, last N symbols indicated by the first field are guard symbols, or the N symbols and the last N symbols indicated by the first field are guard symbols.

Case 3.2: It indicates that N symbols indicated by the first field are not guard symbols, last N symbols indicated by the first field are not guard symbols, or the N symbols and the last N symbols indicated by the first field are not guard symbols.

For example, when the flag is two bits, if the bits are 00, 01, 10, or 11, the following four cases are respectively indicated.

Case 4.1: It indicates that N symbols indicated by the first field are guard symbols.

Case 4.2: It indicates that N symbols indicated by the first field are not guard symbols.

Case 4.3: It indicates that last N symbols indicated by the first field are guard symbols.

Case 4.4: It indicates that last N symbols indicated by the first field are not guard symbols.

In the foregoing two cases in which the bit is 1 or 0 and the bits are 00, 01, 10, or 11, N may be a positive integer greater than or equal to 1.

In the one-stage configuration, the network device may alternatively send third indication information to the second terminal, to indicate the SR symbols that are of the second terminal and that are used to receive the sensing signal, and then send fifth indication information to the second terminal to indicate the guard symbol. For example, the third indication information includes a first field. The first field indicates that the 10^{th} symbol to the 13^{th} symbol in the 1^{st} uplink slot are the SR symbols used to receive the sensing signal. The fifth indication information indicates that the 9^{th} symbol and/or the 14^{th} symbol in the 1^{st} uplink slot of the second terminal are/is configured as the guard symbols/guard symbol.

In the two-stage configuration, a first manner is that the network device may send the third indication information to the second terminal, to indicate that the 9^{th} symbol to the 14^{th} symbol in the 1^{st} uplink slot of the second terminal are symbols used to send or receive the sensing signal; and then indicate, via fourth indication information, that the 10^{th} symbol to the 13^{th} symbol in the 1^{st} uplink slot of the second terminal are the SR symbols used to receive the sensing signal and the 9^{th} symbol and/or the 14^{th} symbol in the 1^{st} uplink slot of the second terminal are/is the guard symbols/guard symbol (guard symbol). The fourth indication information includes a third field and a fourth field. The third field indicates the SR symbols used to receive the sensing signal, and the fourth field indicates the guard symbol. Alternatively, the third field indicates the SR symbols used to receive the sensing signal and the guard symbol, and the fourth field further indicates, based on the plurality of symbols indicated by the third field, that some of the symbols are the SR symbols used to receive the sensing signal or the guard symbols. The third field and the fourth field may be used for indication by using bitmaps, or the fourth field may be used for indication in a form of a flag (flag).

Indication manners of the third field and the fourth field are the same as the foregoing indication manners of the first field and the second field. Details are not described herein again.

In the two-stage configuration, a second manner is that the network device may send the third indication information to the second terminal, to indicate that the 10^{th} symbol to the 13^{th} symbol in the 1^{st} uplink slot of the second terminal are symbols used to send or receive the sensing signal; and then indicate, via fourth indication information, that the 10^{th} symbol to the 13^{th} symbol in the 1^{st} uplink slot of the second terminal are the SR symbols used to receive the sensing signal and the 9^{th} symbol and/or the 14^{th} symbol in the 1^{st} uplink slot of the second terminal are/is the guard symbols/guard symbol (guard symbol). The fourth indication information includes a third field and a fourth field. The third field indicates the SR symbols used to receive the sensing signal, and the fourth field indicates the guard symbol. Alternatively, the third field indicates the SR symbols used to receive the sensing signal and the guard symbol, and the fourth field indicates the SR symbols used to receive the sensing signal or the guard symbol. Alternatively, the fourth indication information includes only a third field. The third field indicates the SR symbols used to receive the sensing signal and the guard symbol. The third field and/or the fourth field may be used for indication by using bitmaps, or the fourth field may be used for indication in a form of a flag (flag).

Indication manners of the third field and the fourth field are the same as the foregoing indication manners of the first field and the second field. Details are not described herein again.

Alternatively, the network device may send the fourth indication information to the second terminal, to indicate the SR symbols used to receive the sensing signal, for example, the fourth indication information indicates that the 10^{th} symbol to the 13^{th} symbol in the 1^{st} uplink slot of the second terminal are the SR symbols used to receive the sensing signal, and then indicate the guard symbol via fifth indication information, for example, the fifth indication information indicates that the 9^{th} symbol and/or the 14^{th} symbol in the 1^{st} uplink slot of the second terminal are/is the guard symbols/guard symbol (guard symbol).

It should be noted that for the receive end of the sensing signal, a guard symbol may be configured between an uplink resource unit and a sensing-receive resource unit. If a resource unit adjacent to the sensing-receive resource unit is a downlink resource, the guard symbol does not need to be configured.

Correspondingly, after receiving the sensing signal, the second terminal may perform an operation such as measurement based on the received sensing signal, to obtain a corresponding sensing result. For example, for a sensing signal for positioning, the obtained corresponding sensing result may be location information; and for a sensing signal for ranging, the obtained corresponding sensing result may be distance information. For a process in which a terminal obtains corresponding sensing results based on different sensing signals, refer to an existing related technology. This is not specifically limited in this application.

Optionally, the method may further include: The second terminal sends the sensing result to the network device or the first terminal.

In the foregoing implementations, an uplink resource of a terminal is configured as a resource used to send or receive a sensing signal, and identical resources are configured for a transmit end and a receive end of a sidelink to send or receive the sensing signal, to fully use the existing uplink resource, so that a sensing/measurement task between terminals is implemented, and communication transmission efficiency is improved.

In addition, as shown in FIG. 7, an embodiment of this application provides a method for sending or receiving a sensing signal. To improve communication efficiency and utilization of spectrum resources, sensing and measurement between a terminal and a network device and sensing and measurement between terminals may be performed simultaneously. For example, the method may be applied to a scenario in which a first terminal sends a sensing signal to both a network device and a second terminal, and may specifically include the following steps.

S701: The first terminal determines a first resource used to send a sensing signal.

The first resource is an uplink resource configured for the first terminal side and used to send the sensing signal. For a manner in which the first terminal determines a resource used to send the sensing signal, refer to any configuration manner in step S401 in the foregoing embodiment. It is determined, through a configuration of a sensing resource (a sensing-transmit resource), that the sensing signal may be sent on the first resource.

S702: The first terminal sends the sensing signal to both a network device and at least one second terminal by using the first resource.

S703: The second terminal receives the sensing signal by using the first resource, and determines a sensing result based on the sensing signal.

For a manner in which the at least one second terminal determines a resource used to receive the sensing signal, refer to any configuration manner in step S403 in the foregoing embodiment. It is determined, through a configuration of a sensing resource (a sensing-receive resource), that the sensing signal is received on the first resource.

In an implementation, because there is a specific delay between data sending and receiving in a communication network, to compensate for a delay for sending a signal by a terminal to the network device, the network device (for example, a base station) may configure a timing advance (Timing Advance, TA) for the terminal device, to indicate duration for which the terminal sends the signal in advance. Timing advances for different devices may be different, and the terminal may adjust, based on the TA sent by the network device, timing information of the terminal for sending a signal.

For example, an advance of uplink timing of the first terminal relative to downlink timing is a TA 1, and an advance of uplink timing of the second terminal relative to downlink timing is a TA 2. Because the first terminal sends the sensing signal to both the network device and the second terminal, to ensure that the network device successfully receives the sensing signal, the network device still sends the sensing signal based on the existing TA 1. However, because timing of the second terminal is not synchronized with timing of the first terminal, sending and receiving of the sensing signal between the first terminal and the second terminal may also be asynchronous, resulting in incomplete signal receiving or a signal receiving failure. To ensure that the second terminal can synchronously receive the sensing signal sent by the first terminal, the timing of the second terminal needs to be adjusted. To be specific, the network device may adjust, through a specific configuration, a TA for receiving the sensing signal by the second terminal. For example, a timing advance value for receiving the sensing signal by the second terminal is a TA_UE 2. Determining and configuration of the timing advance are described in detail below. Details are not described herein.

S704: The network device receives the sensing signal by using the first resource, and determines a sensing result based on the sensing signal.

The network device determines that a resource used by the first terminal to send the sensing signal is the first resource, so as to receive the sensing signal from the first terminal by using the first resource, and performs measurement based on the sensing signal to obtain the sensing result.

In an implementation, the method may further include the following step.

S705: The second terminal sends the sensing result to the network device.

Optionally, the at least one second terminal may further feed back, to the network device, the sensing result obtained based on the sensing signal sent by the first terminal, so that the network device may summarize the sensing result of the network device and the sensing result from the at least one second terminal.

In the foregoing implementations, an uplink resource of a terminal is configured as a resource used to send or receive a sensing signal, and the first terminal sends the sensing signal to both the network device and the at least one second terminal, so that a sensing/measurement task between terminals and a sensing/measurement task between the terminal and the network device are synchronously implemented, thereby effectively improving communication efficiency of a sensing network and utilization of spectrum resources.

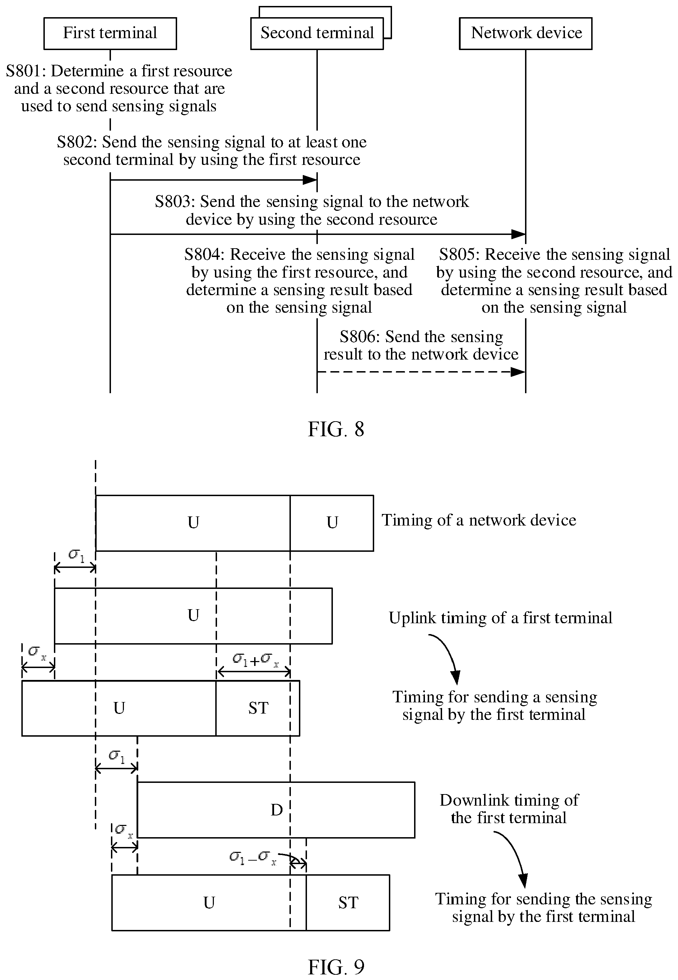

In addition, as shown in FIG. 8, an embodiment of this application provides a method for sending or receiving a sensing signal. The method may be further applied to a scenario in which a first terminal separately sends sensing signals to a network device and a second terminal and may specifically include the following steps.

S801: The first terminal determines a first resource and a second resource that are used to send sensing signals.

The first resource and the second resource are resources used to send the sensing signals. The first resource and/or the second resource are/is some resource units in a first resource set, and the first resource set includes resources used by the first terminal to send uplink information. A configuration manner of the second resource is similar to a configuration manner of the first resource. For details, refer to the related descriptions in step S401 in the foregoing embodiments.

S802: The first terminal sends the sensing signal to at least one second terminal by using the first resource.

S803: The first terminal sends the sensing signal to the network device by using the second resource.

In the implementation scenario, the first terminal may separately send the sensing signals to the at least one second terminal and the network device in sequence by using different sensing resources (for example, sensing symbols). A time sequence in which the first terminal sends the sensing signals to the second terminal and the network device is not limited in this embodiment of this application. In other words, an execution sequence of step S802 and step S803 is not limited in this embodiment of this application.

For example, the first terminal may send the sensing signal to the at least one second terminal by using the first resource, and the second terminal may send the sensing signal to the network device by using the second resource.

S804: The second terminal receives the sensing signal from the first terminal by using the first resource, and determines a sensing result based on the sensing signal.

S805: The network device receives the sensing signal from the first terminal by using the second resource, and determines a sensing result based on the sensing signal.

In an implementation, the method may further include the following step.

S806: The second terminal sends the sensing result to the network device.

In an implementation, to further improve time sensitivity of a resource for sending the sensing signal, or when a communication network has a specific requirement for a moment at which the first terminal sends the sensing signal or a moment at which the second terminal receives the sensing signal, before the first terminal sends the sensing signal to the second terminal, the network device may adjust, through a specific configuration, a TA for sending the sensing signal by the first terminal. For example, a timing advance value for sending the sensing signal by the first terminal to the second terminal is a TA_UE 1.

Specifically, in step S802, before the first terminal sends the sensing signal to the second terminal by using the first resource, the method further includes the following steps.

### Step 1: The network device sends a first parameter to the first terminal.

The first parameter may be a value greater than 0, less than 0, or equal to 0.

Step 2: The first terminal determines a timing advance for sending the sensing signal to the second terminal.

Correspondingly, the first terminal receives the first parameter configured by the network device, and then may determine, based on the first parameter, the timing advance for sending the sensing signal by the first terminal to the second terminal.

In an implementation, if a timing advance between uplink transmission and downlink transmission of the first terminal is a first timing advance TA 1, and the timing advance for sending the sensing signal by the first terminal to the second terminal is a TA_UE 1, the first terminal may obtain the TA_UE 1 based on the TA 1 and the configured first parameter.

For example, as shown in FIG. 9, an advance TA 1 of uplink timing of the first terminal relative to downlink timing is 2*σ*₁, an advance of the uplink timing of the first terminal relative to timing of a base station may be *σ*1, and an advance of the downlink timing of the first terminal relative to the timing of the base station is delayed by *σ*₁, which may alternatively be understood as that an advance of the downlink timing of the first terminal relative to the timing of the base station is -*σ*₁. If the first parameter configured by the network device is *σₓ*, the timing advance TA_UE 1 for sending the sensing signal by the first terminal to the second terminal may be σ₁ + *σₓ, σ*₁ - *σₓ*, or *σₓ - σ*₁*. σₓ* may be a parameter greater than 0, less than 0, or equal to 0. If the uplink timing of the first terminal relative to the timing of the base station is used as a reference, the timing advance TA_UE 1 for sending the sensing signal by the first terminal to the second terminal may be: TA_UE 1=*σ*₁+*σₓ*. *σₓ* may be the parameter greater than 0, less than 0, or equal to 0. If the first parameter is greater than 0, it indicates that the first terminal may send the sensing signal to the second terminal in advance; if the first parameter is less than 0, it indicates that the first terminal may delay sending of the sensing signal to the second terminal; or if the first parameter is equal to 0, it indicates that the first terminal sends the sensing signal to the second terminal based on timing of the first terminal without an advance or a delay.

Alternatively, if the first parameter is greater than 0, the timing advance TA_UE 1 for sending the sensing signal by the first terminal to the second terminal may be: TA_UE 1-1=*σ*₁+*σₓ*, and it indicates that the first terminal may send the sensing signal to the second terminal in advance; or the timing advance TA_UE 1 for sending the sensing signal by the first terminal to the second terminal may be: TA_UE 1-2=*σ*₁-*σₓ*, and it indicates that the first terminal may delay sending of the sensing signal to the second terminal. Two specific manners of the timing advance TA_UE 1 for sending the sensing signal by the first terminal to the second terminal may be configured by the base station, and the first terminal may support only one or both of the manners.

If the downlink timing of the first terminal relative to the timing of the base station is used as a reference, the timing advance TA_UE 1 for sending the sensing signal by the first terminal to the second terminal may be: TA_UE 1=*σ*₁ + *σₓ. σₓ* may be the parameter greater than 0, less than 0, or equal to 0. If the first parameter is greater than 0, it indicates that the first terminal may delay sending of the sensing signal to the second terminal; if the first parameter is less than 0, it indicates that the first terminal may send the sensing signal to the second terminal in advance; or if the first parameter is equal to 0, it indicates that the first terminal sends the sensing signal to the second terminal based on timing of the first terminal without an advance or a delay.

Alternatively, if the first parameter is greater than 0, the timing advance TA_UE 1 for sending the sensing signal by the first terminal to the second terminal may be: TA_UE 1-1=*σ*₁-*σₓ*, and it indicates that the first terminal may send the sensing signal to the second terminal in advance; or the timing advance TA_UE 1 for sending the sensing signal by the first terminal to the second terminal may be: TA_UE 1-2=*σ*₁+*σₓ*, and it indicates that the first terminal may delay sending of the sensing signal to the second terminal.

In addition, the network device may further directly configure, for the first terminal, the timing advance for sending the sensing signal. To be specific, according to the foregoing example, the first parameter sent by the network device to the first terminal may be *σ*₁+*σₓ* (or *σ*₁-*σₓ*), and the first terminal may directly use the first parameter as the timing advance for sending the sensing signal by the first terminal to the second terminal and adjust timing for sending the sensing signal.

In an implementation, if a transmission delay for sending a signal by the first terminal to the second terminal is further considered, the timing advance for sending the sensing signal by the first terminal to the second terminal may be further determined based on the transmission delay. Specifically, the first terminal may determine, based on the first parameter, the first timing advance TA 1 between the uplink transmission and the downlink transmission of the first terminal, a value of a transmission delay between the first terminal and the second terminal, the timing advance for sending the sensing signal to the second terminal.

For example, if the transmission delay for sending the signal by the first terminal to the second terminal is *σ*₃, the timing advance TA_UE 1 for sending the sensing signal by the first terminal to the second terminal may be: TA_UE 1=*σ*₁+*σₓ*+*σ*₃, or the TA_UE 1 may be: TA_UE 1=*σ*₁-*σₓ+σ*₃.

It can be learned with reference to the foregoing descriptions that to ensure that the second terminal can synchronously receive the sensing signal sent by the first terminal, the network device may adjust a timing advance value of the second terminal by configuring a specific parameter, so that the second terminal device may obtain, based on the parameter configured by the network device, the timing advance value for receiving the sensing signal, to implement synchronous receiving.

In an implementation, in step S803, before the second terminal receives the sensing signal by using the first resource, the method further includes the following steps.

Step 1: The second terminal receives at least one second parameter from the network device.

Step 2: The second terminal determines a timing advance for receiving the sensing signal from the first terminal.

Correspondingly, the second terminal receives the at least one second parameter configured by the network device, and then may obtain, based on the at least one second parameter, the timing advance for receiving the sensing signal.

**In** an implementation, a timing advance between uplink transmission and downlink transmission of the second terminal is a second timing advance, the timing advance for receiving, by the second terminal, the sensing signal sent by the first terminal is a third timing advance, and the second terminal may obtain, based on the second timing advance and the received second parameter, the third timing advance for receiving the sensing signal.

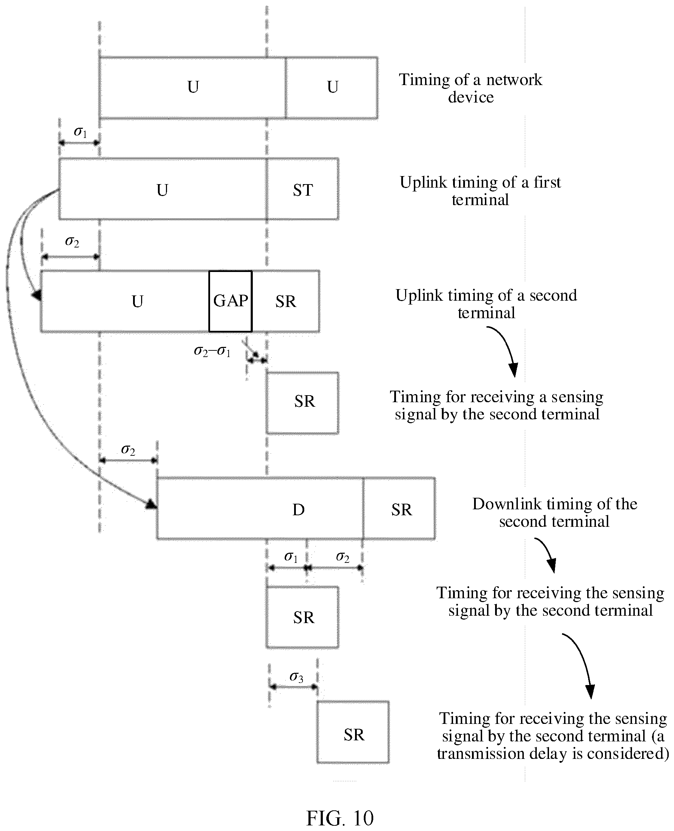

For example, as shown in FIG. 10, an advance TA of uplink timing of the first terminal relative to downlink timing is 2*σ*₁, an advance of the uplink timing of the first terminal relative to timing of a base station may be *σ*₁, and an advance of the downlink timing of the first terminal relative to the timing of the base station is delayed by *σ*₁, which may alternatively be understood as that an advance of the downlink timing of the first terminal relative to the timing of the base station is -*σ*₁. An advance TA of uplink timing of the second terminal relative to downlink timing is 2*σ*₂, and an advance of the uplink timing of the second terminal relative to the timing of the base station is delayed by *σ*₂, which may alternatively be understood as that an advance of the downlink timing of the second terminal relative to the timing of the base station may be *σ*₂, or an advance of the downlink timing of the second terminal relative to the timing of the base station may be -*σ*₂.

An adjustment amount of the timing advance TA for receiving the sensing signal by the second terminal may be *σ*₂ + *σ*₁, *σ*₂- *σ*₁, or *σ*₁-*σ*₂. The second terminal receives the sensing signal in advance or delays receiving of the sensing signal based on the adjustment amount of the timing advance TA.

When the uplink timing of the second terminal relative to the timing of the base station is used as a reference, an adjustment amount of a timing advance TA of timing for receiving of the sensing signal by the second terminal relative to an uplink signal may be *σ*₂ - *σ*₁, and the network device may directly configure the second parameter as *σ*₂ - *σ*₁, or configure the second parameter as *σ*₁. The second terminal obtains, based on the known *σ*₂ of the second terminal, the adjustment amount *σ*₂ - *σ*₁ of the timing advance TA for receiving the sensing signal. When a value of *σ*₂ - *σ*₁ is greater than 0, the timing advance TA of the timing for receiving of the sensing signal by the second terminal relative to the uplink signal is delayed by σ₂ - *σ*₁. When the value of *σ*₂ - *σ*₁ is less than 0, the timing advance TA of the timing for receiving of the sensing signal by the second terminal relative to the uplink signal is preceded by *σ*₂ - *σ*₁. *σ*₁-*σ*₂ may be considered as a case in which *σ*₂-*σ*₁ is less than 0.

When the downlink timing of the second terminal relative to the timing of the base station is used as a reference, an adjustment amount of a timing advance TA of the timing for receiving of the sensing signal by the second terminal relative to a downlink signal may be *σ*₂ + *σ*₁, and the network device may directly configure the second parameter as *σ*₂ + *σ*₁, or configure the second parameter as *σ*₁. The second terminal obtains, based on the known *σ*₂ of the second terminal, the adjustment amount *σ*₂ + *σ*₁ of the timing advance TA for receiving the sensing signal.

Based on the foregoing, the second parameter may include at least one of the following: a first timing advance TA 1 between uplink transmission and downlink transmission of the first terminal=2*σ*₁, a half of the first timing advance (that is, a timing advance *σ*₁ between uplink transmission of the first terminal and the base station), a sum (TA 1+TA 2) of the first timing advance and a second timing advance between uplink transmission and downlink transmission of the second terminal, a difference (TA 1-TA 2) between the first timing advance and the second timing advance between the uplink transmission and the downlink transmission of the second terminal, a half of the sum (*σ*₁ + *σ*₂) of the first timing advance and the second timing advance, or the difference (*σ*₁ - *σ*₂) between the first timing advance and the second timing advance. Therefore, the second terminal may obtain, based on a preset algorithm and the configured second parameter, the timing advance for receiving the sensing signal.

In an implementation, if a transmission delay for sending a signal by the first terminal to the second terminal is further considered, the timing advance for receiving the sensing signal by the second terminal may be further determined based on the transmission delay. Specifically, the second terminal may determine, based on the second parameter, the second timing advance between the uplink transmission and the downlink transmission of the second terminal, a value of a transmission delay between the first terminal and the second terminal, a third timing advance for receiving the sensing signal from the first terminal.

For example, if the transmission delay for sending the signal by the first terminal to the second terminal is *σ*₃, the third timing advance TA 3 for receiving, by the second terminal, the sensing signal from the first terminal may be: TA 3=*σ*₂ - *σ*₁ +*σ*₃ (the uplink timing of the second terminal is used as the reference), or the third timing advance TA 3 may be: TA 3=*σ*₂ + *σ*₁ + *σ*₃ (the downlink timing of the second terminal is used as the reference).

Further, with reference to the foregoing implementations, if the network device further configures, for the first terminal, a timing advance adjustment value (for example, the first parameter) for sending the sensing signal, to indicate timing adjustment for sending the sensing signal by the first terminal to the second terminal, the second terminal further needs to determine, with reference to the first parameter, a timing advance value for receiving the sensing signal from the first terminal.

For example, an advance of the uplink timing of the first terminal relative to the timing of the base station may be *σ*₁, and an advance of the downlink timing of the first terminal relative to the timing of the base station is delayed by *σ*₁, which may alternatively be understood as that an advance of the downlink timing of the first terminal relative to the timing of the base station is - *σ*₁; and an advance of the uplink timing of the second terminal relative to the timing of the base station may be *σ*₂, and an advance of the downlink timing of the second terminal relative to the timing of the base station is delayed by *σ*₂, which may alternatively be understood as that an advance of the downlink timing of the second terminal relative to the timing of the base station may be -*σ*₂.

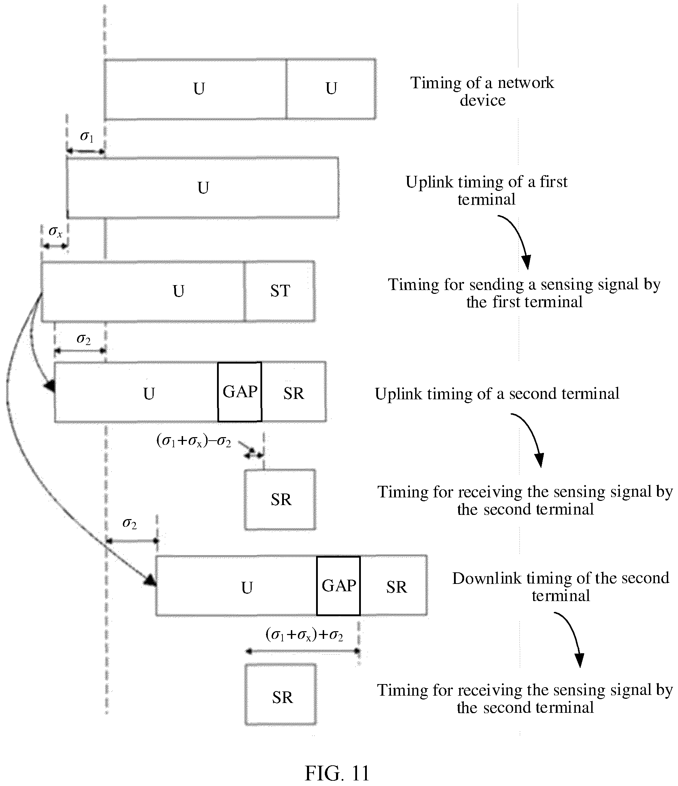

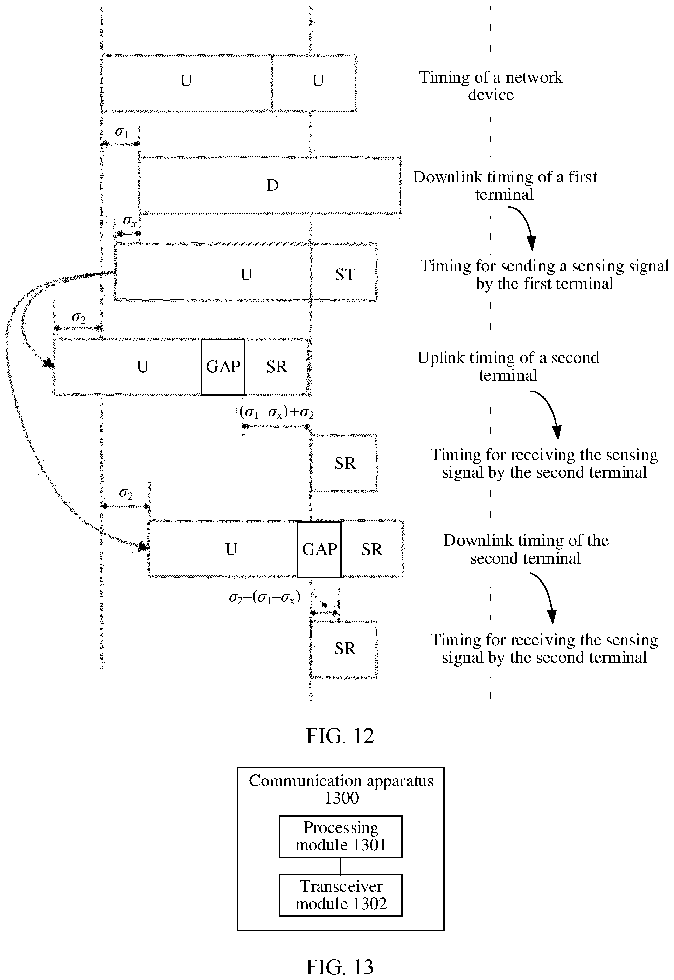

The timing advance for receiving the sensing signal by the second terminal may be: (*σ*₁ ± *σₓ*) + *σ*₂, (*σ*₁ ± *σₓ*)- *σ*₂, *σ*₂- (*σ*₁ ± *σₓ*), (σ*ₓ - σ*₁) + *σ*₂, (*σₓ - σ*₁) - *σ*₂, or *σ₂-* (*σₓ - σ*₁)*.* The network device may directly configure the second parameter as (*σ*₁ ± *σₓ*) + *σ*₂, (*σ*₁ ± *σₓ*)- *σ*₂, *σ*₂ - (*σ*₁ ± *σₓ*) , (*σₓ-σ*₁) + *σ*₂ , (*σₓ- σ*₁)- *σ*₂, or *σ*₂- (σ*ₓ - σ*₁) *,* configure at least one second parameter as *σ*₁ and *σₓ,* or configure one second parameter as *σ*₁ ± σₓ or *σₓ - σ*₁. The second terminal obtains, based on the known *σ*₂ of the second terminal, the timing advance for receiving the sensing signal.
1. When the uplink timing of the first terminal is used as the reference, and the timing advance for sending the sensing signal by the first terminal to the second terminal is *σ*₁+*σ*ₓ, as shown in FIG. 11:
   (1) If the uplink timing of the second terminal is used as the reference, the timing advance of timing for receiving of the sensing signal by the second terminal relative to the uplink signal may be σ₁ +*σₓ* - *σ*₂. In this case, the network device may directly configure the second parameter as a value of *σ*₁ + *σₓ* - *σ*₂, configure at least one second parameter as *σ*₁ and *σₓ*, or configure one second parameter as *σ*₁ + *σₓ*. The second terminal obtains, based on the known *σ*₂ of the second terminal, the timing advance *σ*₁ +*σₓ* - *σ*₂ for receiving the sensing signal.
   (2) If the downlink timing of the second terminal is used as the reference, the timing advance of timing for receiving of the sensing signal by the second terminal relative to the downlink signal may be *σ*₁+*σₓ* + *σ*₂. In this case, the network device may directly configure the second parameter as a value of *σ*₁+*σₓ* + *σ*₂, configure at least one second parameter as *σ*₁ and *σₓ*, or configure one second parameter as *σ*₁ - *σ*ₓ. The second terminal obtains, based on the known *σ*₂ of the second terminal, the timing advance *σ*₁+*σₓ* + *σ*₂ for receiving the sensing signal.
2. When the downlink timing of the first terminal is used as the reference, and the timing advance for sending the sensing signal by the first terminal to the second terminal is *σ*₁ - *σₓ*, as shown in FIG. 12:
   (1) If the uplink timing of the second terminal is used as the reference, the timing advance of timing for receiving of the sensing signal by the second terminal relative to the uplink signal may be *σ*₁ - *σₓ* + *σ*₂. In this case, the network device may directly configure the second parameter as a value of *σ*₁ -*σₓ* + *σ*₂, or configure at least one second parameter as *σ*₁ and *σₓ*. The second terminal obtains, based on the known *σ*₂ of the second terminal, the timing advance *σ*₁ - *σₓ* + *σ*₂ for receiving the sensing signal.
   (2) If the downlink timing of the second terminal is used as the reference, the timing advance of timing for receiving of the sensing signal by the second terminal relative to the downlink signal may be *σ*₂- (*σ*₁ - *σₓ*). In this case, the network device may directly configure the second parameter as a value of *σ*₂- (*σ*₁ - *σₓ*), or configure at least one second parameter as *σ*₁ and *σₓ.* The second terminal obtains, based on the known *σ*₂ of the second terminal, the timing advance *σ*₂ - (*σ*₁ - *σₓ*) for receiving the sensing signal.

In an implementation, if a transmission delay for sending a signal by the first terminal to the second terminal is further considered, the timing advance for receiving the sensing signal by the second terminal from the first terminal may be further determined based on the transmission delay. Specifically, similar to the foregoing determining algorithm, if a value of a transmission delay between the first terminal and the second terminal is *σ*₃, the second terminal delays *σ*₃ (namely, +*σ*₃) based on the foregoing determined timing advance for receiving the sensing signal.

In the foregoing implementations, with reference to a specific implementation scenario, the network device may configure, for the receive end, a timing advance for receiving the sensing signal, so that the receive end can synchronously receive the sensing signal, to improve transmission efficiency of the sensing signal of the sidelink. In addition, the network device may further configure, for the transmit end, a timing advance for sending the sensing signal, to meet a specific requirement, time sensitivity, and flexibility for sending the sensing signal, and further improve the transmission efficiency of the sensing signal of the sidelink.

Based on the foregoing embodiments, this application further provides a communication apparatus, configured to perform the steps performed by the first terminal, the second terminal, and the network device in the foregoing embodiments.

As shown in FIG. 13, this application provides a communication apparatus, configured to perform the steps implemented by the first terminal in the foregoing embodiments. The communication apparatus 1300 includes a processing module 1301 and a transceiver module 1302.

The processing module 1301 is configured to determine a first resource used to send a sensing signal.

The transceiver module 1302 is configured to send the sensing signal to at least one second terminal by using the first resource, send the sensing signal to both a network device and the at least one second terminal by using the first resource, or separately send sensing signals to the at least one second terminal and the network device by using the first resource and a second resource, where the second resource is a resource used to send the sensing signal, and the first resource and/or the second resource are/is some resource units in a first resource set, where the first resource set includes resources used to send uplink information.

In a possible implementation, the transceiver module 1302 is further configured to receive first indication information from the network device, where the first indication information indicates that the first resource and/or the second resource are/is used to receive or send the sensing signal.

In a possible implementation, the transceiver module 1302 is further configured to receive second indication information from the network device, where the second indication information indicates that some or all resource units in the first resource and/or the second resource are used to send the sensing signal.

In a possible implementation, the processing module 1301 is further configured to determine, based on at least one of a first timing advance between uplink transmission and downlink transmission of the apparatus 1300, a first parameter, or a value of a transmission delay between the apparatus 1300 and the second terminal, a timing advance for sending the sensing signal to the second terminal.

In a possible implementation, the first parameter is predefined, or is configured by the network device.

In addition, as shown in FIG. 13, this application provides a communication apparatus, configured to perform the steps implemented by the network device in the foregoing embodiments. The communication apparatus 1300 includes a processing module 1301.

The processing module 1301 is configured to determine a first resource used by a first terminal to send or receive a sensing signal, where the first resource is some resource units in a first resource set, and the first resource set includes resources used by the first terminal to send uplink information.

The processing module 1301 is further configured to determine a first resource used by a second terminal to send or receive a sensing signal, where the first resource is some resource units in a second resource set, and the second resource set includes resources used by the second terminal to send uplink information.

In a possible implementation, the apparatus 1300 further includes a transceiver module 1302, configured to receive the sensing signal from the first terminal by using the first resource.

In a possible implementation, the transceiver module 1302 is further configured to send first indication information to the first terminal, where the first indication information indicates that the first resource is used to send or receive the sensing signal.

In a possible implementation, the transceiver module 1302 is further configured to send second indication information to the first terminal, where the second indication information indicates that some or all resource units in the first resource are used to send the sensing signal.

In a possible implementation, the transceiver module 1302 is further configured to send third indication information to the second terminal, where the third indication information indicates that some or all resource units in the first resource are used to send or receive the sensing signal.

In a possible implementation, the transceiver module 1302 is further configured to send fourth indication information to the second terminal, where the fourth indication information indicates that some or all resource units in the first resource are used to receive the sensing signal.

In a possible implementation, the transceiver module 1302 is further configured to receive a sensing result from the second terminal, where the sensing result is determined by the second terminal based on the sensing signal received from the first terminal.

In a possible implementation, the transceiver module 1302 is further configured to send a first parameter to the first terminal, where the first parameter is used to determine a timing advance for sending the sensing signal by the first terminal to the second terminal.

In a possible implementation, the transceiver module 1302 is further configured to send at least one second parameter to the second terminal, where the at least one second parameter is used by the second terminal to determine a timing advance for receiving the sensing signal from the first terminal.

In a possible implementation, the second parameter is determined by using at least one of the following: a first timing advance between uplink transmission and downlink transmission of the first terminal, a half of the first timing advance, a sum of the first timing advance and a second timing advance between uplink transmission and downlink transmission of the second terminal, a difference between the first timing advance and the second timing advance between the uplink transmission and the downlink transmission of the second terminal, a half of the sum of the second timing advance and the first timing advance, or a half of the difference between the second timing advance and the first timing advance.

As shown in FIG. 13, this application provides a communication apparatus, configured to perform the steps implemented by the first terminal in the foregoing embodiments. The communication apparatus 1300 includes a processing module 1301 and a transceiver module 1302.

The processing module 1301 is configured to determine a first resource.

The transceiver module 1302 is configured to receive a sensing signal from a first terminal by using the first resource, where the first resource is some resource units in a second resource set, and the second resource set includes resources used to send uplink information.

In a possible implementation, the transceiver module 1302 is further configured to receive third indication information from a network device, where the third indication information indicates that the first resource is used to send or receive the sensing signal.

In a possible implementation, the transceiver module 1302 is further configured to receive fourth indication information from the network device, where the fourth indication information indicates that some or all resource units in the first resource are used to receive the sensing signal.

In a possible implementation, the third indication information or the fourth indication information further indicates that a third resource is a guard symbol, and the third resource is some resource units in the second resource set, or the third resource is some resource units in the first resource.

In a possible implementation, the processing module 1301 is further configured to determine, based on at least one of a second parameter, a second timing advance between uplink transmission and downlink transmission of the apparatus 1300, or a value of a transmission delay between the first terminal and the apparatus 1300, a timing advance for receiving the sensing signal from the first terminal.

In a possible implementation, the second parameter is determined by using at least one of the following: a first timing advance between uplink transmission and downlink transmission of the first terminal, a half of the first timing advance, a sum of the first timing advance and a second timing advance between uplink transmission and downlink transmission of the apparatus, a difference between the first timing advance and the second timing advance between the uplink transmission and the downlink transmission of the second terminal, a half of the sum of the second timing advance, or a half of the difference between the second timing advance and the first timing advance.

In a possible implementation, the second parameter is predefined, or is configured by the network device.

In a simple embodiment, a person skilled in the art can figure out that the communication apparatus 1300 may use the form shown in FIG. 3. For example, the processor 301 in FIG. 3 may invoke computer-executable instructions stored in the memory 303, so that the communication apparatus 1300 performs the method performed by each network element/communication apparatus in the foregoing method embodiments.

For example, functions/implementation processes of the transceiver module 1302 in FIG. 13 may be implemented by the processor 301 in FIG. 3 by invoking the computer-executable instructions stored in the memory 303. Alternatively, functions/implementation processes of the processing module 1301 in FIG. 13 may be implemented by the processor 301 in FIG. 3 invoking the computer-executable instructions stored in the memory 303. Functions/implementation processes of the transceiver module 1302 in FIG. 13 may be implemented by the communication interface 304 in FIG. 3.

It should be noted that one or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built into a SoC (System on Chip) or an ASIC, or may be an independent semiconductor chip. In addition to a core for executing software instructions to perform operations or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and may run necessary software or does not depend on software to perform the foregoing method procedures.

Optionally, an embodiment of this application further provides a chip system, including at least one processor and an interface, where the at least one processor is coupled to a memory through the interface. When the at least one processor executes a computer program or instructions in the memory, the method in any one of the foregoing method embodiments is performed. In a possible implementation, the chip system further includes the memory. Optionally, the chip system may include a chip, or may include a chip and another discrete device. This is not specifically limited in embodiments of this application.

Optionally, an embodiment of this application further provides a computer-readable storage medium. All or some of the procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of the communication apparatus in any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may further include both an internal storage unit and an external storage device of the communication apparatus. The computer-readable storage medium is configured to store the computer program and store other programs and data that are needed by the communication apparatus. The computer-readable storage medium may be further configured to temporarily store data that has been output or is to be output.

Optionally, an embodiment of this application further provides a computer program product. All or some of the procedures in the foregoing method embodiments may be implemented by a computer program instructing related hardware. The program may be stored in the foregoing computer program product. When the program is executed, the procedures in the foregoing method embodiments may be included.

Optionally, an embodiment of this application further provides computer instructions. All or some of the procedures in the foregoing method embodiments may be completed by computer instructions instructing related hardware (for example, a computer, a processor, an access network device, a mobility management network element, or a session management network element). The program may be stored in the computer-readable storage medium or the computer program product.

The foregoing descriptions about implementations allow a person skilled in the art to understand that, for the purpose of convenient and brief description, division into the foregoing functional modules is used as an example for illustration. In an actual application, the foregoing functions may be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the module or unit division is merely logical function division and there may be another division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for sending a sensing signal, wherein the method comprises:
determining, by a first terminal, a first resource used to send a sensing signal; and
sending the sensing signal to at least one second terminal by using the first resource, sending the sensing signal to both a network device and the at least one second terminal by using the first resource, or separately sending sensing signals to the at least one second terminal and the network device by using the first resource and a second resource, wherein the second resource is a resource used to send the sensing signal, and the first resource and/or the second resource are/is some resource units in a first resource set, wherein the first resource set comprises resources used to send uplink information.

2. The method according to claim 1, wherein the method further comprises:
receiving first indication information from the network device, wherein the first indication information indicates that the first resource and/or the second resource are/is used to receive or send the sensing signal.

3. The method according to claim 2, wherein the method further comprises:
receiving second indication information from the network device, wherein the second indication information indicates that some or all resource units in the first resource and/or the second resource are used to send the sensing signal.

4. The method according to any one of claims 1 to 3, wherein the method further comprises:
determining, based on at least one of a first timing advance between uplink transmission and downlink transmission of the first terminal, a first parameter, or a value of a transmission delay between the first terminal and the second terminal, a timing advance for sending the sensing signal to the second terminal.

5. The method according to claim 4, wherein the first parameter is predefined, or is configured by the network device.

6. A method for sending or receiving a sensing signal, wherein the method comprises:
determining, by a network device, a first resource used by a first terminal to send or receive a sensing signal, wherein the first resource is some resource units in a first resource set, and the first resource set comprises resources used by the first terminal to send uplink information; and
determining, by the network device, a first resource used by a second terminal to send or receive a sensing signal, wherein the first resource is some resource units in a second resource set, and the second resource set comprises resources used by the second terminal to send uplink information.

7. The method according to claim 6, wherein the method further comprises:
receiving the sensing signal from the first terminal by using the first resource.

8. The method according to claim 6 or 7, wherein the method further comprises:
sending first indication information to the first terminal, wherein the first indication information indicates that the first resource is used to send or receive the sensing signal.

9. The method according to claim 8, wherein the method further comprises:
sending second indication information to the first terminal, wherein the second indication information indicates that some or all resource units in the first resource are used to send the sensing signal.

10. The method according to any one of claims 6 to 9, wherein the method further comprises:
sending third indication information to the second terminal, wherein the third indication information indicates that some or all resource units in the first resource are used to send or receive the sensing signal.

11. The method according to claim 10, wherein the method further comprises:
sending fourth indication information to the second terminal, wherein the fourth indication information indicates that some or all resource units in the first resource are used to receive the sensing signal.

12. The method according to any one of claims 6 to 11, wherein the method further comprises:
receiving a sensing result from the second terminal, wherein the sensing result is determined by the second terminal based on the sensing signal received from the first terminal.

13. The method according to any one of claims 6 to 12, wherein the method further comprises:
sending a first parameter to the first terminal, wherein the first parameter is used to determine a timing advance for sending the sensing signal by the first terminal to the second terminal.

14. The method according to any one of claims 6 to 13, wherein the method further comprises:
sending at least one second parameter to the second terminal, wherein the at least one second parameter is used by the second terminal to determine a timing advance for receiving the sensing signal from the first terminal.

15. The method according to claim 14, wherein the second parameter is determined by using at least one of the following: a first timing advance between uplink transmission and downlink transmission of the first terminal, a half of the first timing advance, a sum of the first timing advance and a second timing advance between uplink transmission and downlink transmission of the second terminal, a difference between the first timing advance and the second timing advance between the uplink transmission and the downlink transmission of the second terminal, a half of the sum of the second timing advance and the first timing advance, or a half of the difference between the second timing advance and the first timing advance.

16. A method for receiving a sensing signal, wherein the method comprises:
determining, by a second terminal, a first resource; and
receiving a sensing signal from a first terminal by using the first resource, wherein the first resource is some resource units in a second resource set, and the second resource set comprises resources used to send uplink information.

17. The method according to claim 16, wherein the method further comprises:
receiving third indication information from a network device, wherein the third indication information indicates that the first resource is used to send or receive the sensing signal.

18. The method according to claim 17, wherein the method further comprises:
receiving fourth indication information from the network device, wherein the fourth indication information indicates that some or all resource units in the first resource are used to receive the sensing signal.

19. The method according to claim 17 or 18, wherein the third indication information or the fourth indication information further indicates that a third resource is a guard symbol, and the third resource is some resource units in the second resource set, or the third resource is some resource units in the first resource.

20. The method according to any one of claims 16 to 19, wherein the method further comprises:
determining, based on at least one of a second parameter, a second timing advance between uplink transmission and downlink transmission of the second terminal, or a value of a transmission delay between the first terminal and the second terminal, a timing advance for receiving the sensing signal from the first terminal.

21. The method according to claim 20, wherein the second parameter is determined by using at least one of the following: a first timing advance between uplink transmission and downlink transmission of the first terminal, a half of the first timing advance, a sum of the first timing advance and a second timing advance between uplink transmission and downlink transmission of the second terminal, a difference between the first timing advance and the second timing advance between the uplink transmission and the downlink transmission of the second terminal, a half of the sum of the second timing advance and the first timing advance, or a half of the difference between the second timing advance and the first timing advance.

22. The method according to claim 20 or 21, wherein the second parameter is predefined, or is configured by the network device.

23. A communication apparatus, wherein the communication apparatus comprises:
a processing module, configured to determine a first resource used to send a sensing signal; and
a transceiver module, configured to send the sensing signal to at least one second terminal by using the first resource, send the sensing signal to both a network device and the at least one second terminal by using the first resource, or separately send sensing signals to the at least one second terminal and the network device by using the first resource and a second resource, wherein the second resource is a resource used to send the sensing signal, and the first resource and/or the second resource are/is some resource units in a first resource set, wherein the first resource set comprises resources used to send uplink information.

24. The apparatus according to claim 23, wherein the transceiver module is further configured to receive first indication information from the network device, wherein the first indication information indicates that the first resource and/or the second resource are/is used to receive or send the sensing signal.

25. The apparatus according to claim 23, wherein the transceiver module is further configured to receive second indication information from the network device, wherein the second indication information indicates that some or all resource units in the first resource and/or the second resource are used to send the sensing signal.

26. The apparatus according to any one of claims 23 to 25, wherein the processing module is further configured to determine, based on at least one of a first timing advance between uplink transmission and downlink transmission of the apparatus, a first parameter, or a value of a transmission delay between the apparatus and the second terminal, a timing advance for sending the sensing signal to the second terminal.

27. The apparatus according to claim 26, wherein the first parameter is predefined, or is configured by the network device.

28. A communication apparatus, wherein the communication apparatus comprises:
a processing module, configured to determine a first resource used by a first terminal to send or receive a sensing signal, wherein the first resource is some resource units in a first resource set, and the first resource set comprises resources used by the first terminal to send uplink information, wherein
the processing module is further configured to determine a first resource used by a second terminal to send or receive a sensing signal, wherein the first resource is some resource units in a second resource set, and the second resource set comprises resources used by the second terminal to send uplink information.

29. The apparatus according to claim 28, wherein the apparatus further comprises a transceiver module, configured to receive the sensing signal from the first terminal by using the first resource.

30. The apparatus according to claim 28 or 29, wherein the transceiver module is further configured to send first indication information to the first terminal, wherein the first indication information indicates that the first resource is used to send or receive the sensing signal.

31. The apparatus according to claim 30, wherein the transceiver module is further configured to send second indication information to the first terminal, wherein the second indication information indicates that some or all resource units in the first resource are used to send the sensing signal.

32. The apparatus according to any one of claims 28 to 31, wherein the transceiver module is further configured to send third indication information to the second terminal, wherein the third indication information indicates that some or all resource units in the first resource are used to send or receive the sensing signal.

33. The apparatus according to claim 32, wherein the transceiver module is further configured to send fourth indication information to the second terminal, wherein the fourth indication information indicates that some or all resource units in the first resource are used to receive the sensing signal.

34. The apparatus according to any one of claims 28 to 33, wherein the transceiver module is further configured to receive a sensing result from the second terminal, wherein the sensing result is determined by the second terminal based on the sensing signal received from the first terminal.

35. The apparatus according to any one of claims 28 to 34, wherein the transceiver module is further configured to send a first parameter to the first terminal, wherein the first parameter is used to determine a timing advance for sending the sensing signal by the first terminal to the second terminal.

36. The apparatus according to any one of claims 28 to 35, wherein the transceiver module is further configured to send at least one second parameter to the second terminal, wherein the at least one second parameter is used by the second terminal to determine a timing advance for receiving the sensing signal from the first terminal.

37. The apparatus according to claim 36, wherein the second parameter is determined by using at least one of the following: a first timing advance between uplink transmission and downlink transmission of the first terminal, a half of the first timing advance, a sum of the first timing advance and a second timing advance between uplink transmission and downlink transmission of the second terminal or a difference between the first timing advance and the second timing advance between the uplink transmission and the downlink transmission of the second terminal, or a half of the sum of the second timing advance and the first timing advance or the difference between the second timing advance and the first timing advance.

38. A communication apparatus, wherein the communication apparatus comprises:
a processing module, configured to determine a first resource; and
a transceiver module, configured to receive a sensing signal from a first terminal by using the first resource, wherein the first resource is some resource units in a second resource set, and the second resource set comprises resources used to send uplink information.

39. The apparatus according to claim 38, wherein the transceiver module is further configured to receive third indication information from a network device, wherein the third indication information indicates that the first resource is used to send or receive the sensing signal.

40. The apparatus according to claim 39, wherein the transceiver module is further configured to receive fourth indication information from the network device, wherein the fourth indication information indicates that some or all resource units in the first resource are used to receive the sensing signal.

41. The apparatus according to claim 39 or 40, wherein the third indication information or the fourth indication information further indicates that a third resource is a guard symbol, and the third resource is some resource units in the second resource set, or the third resource is some resource units in the first resource.

42. The apparatus according to any one of claims 38 to 41, wherein the processing module is further configured to determine, based on at least one of a second parameter, a second timing advance between uplink transmission and downlink transmission of the apparatus, or a value of a transmission delay between the first terminal and the apparatus, a timing advance for receiving the sensing signal from the first terminal.

43. The apparatus according to claim 42, wherein the second parameter is determined by using at least one of the following: a first timing advance between uplink transmission and downlink transmission of the first terminal, a half of the first timing advance, a sum of the first timing advance and a second timing advance between uplink transmission and downlink transmission of the apparatus or a difference between the first timing advance and the second timing advance between the uplink transmission and the downlink transmission of the apparatus, or a half of the sum of the second timing advance and the first timing advance or the difference between the second timing advance and the first timing advance.

44. The apparatus according to claim 42 or 43, wherein the second parameter is predefined, or is configured by the network device.

45. A communication apparatus, wherein the communication apparatus comprises a processor and a communication interface, wherein the communication interface is configured to transmit a signal, and the processor is configured to perform the method according to any one of claims 1 to 5, perform the method according to any one of claims 6 to 15, or perform the method according to any one of claims 16 to 22.

46. The apparatus according to claim 45, wherein the processor is configured to run instructions stored in a memory, to perform the method according to any one of claims 1 to 5, perform the method according to any one of claims 6 to 15, or perform the method according to any one of claims 16 to 22.

47. The apparatus according to claim 46, wherein the communication apparatus further comprises the memory.

48. The apparatus according to claim 45, wherein the processor is configured to perform the method according to any one of claims 1 to 5, perform the method according to any one of claims 6 to 15, or perform the method according to any one of claims 16 to 22 through a logic circuit.

49. A computer-readable storage medium, comprising a program or instructions, wherein when the program or the instructions are run by a processor, the method according to any one of claims 1 to 22 is performed.

50. A computer program product, wherein when the computer program product runs on a computer or a processor, the computer or the processor is enabled to perform the method according to any one of claims 1 to 22.

51. A communication system, wherein the communication system comprises the communication apparatus according to any one of claims 23 to 27, the communication apparatus according to any one of claims 28 to 37, and the communication apparatus according to any one of claims 38 to 44.
